(19) **Europäisches Patentamt / European Patent Office / Office européen des brevets**

(11) **EP 1 961 710 A1**

(12) **EUROPEAN PATENT APPLICATION**
published in accordance with Art. 158(3) EPC

(43) Date of publication:
**27.08.2008 Bulletin 2008/35**

(21) Application number: **06833919.1**

(22) Date of filing: **04.12.2006**

(51) Int Cl.:
*C03C 3/078* (2006.01)  *C03C 3/085* (2006.01)
*C03C 3/087* (2006.01)  *C03C 3/089* (2006.01)
*C03C 3/091* (2006.01)  *C03C 3/093* (2006.01)
*C03C 3/095* (2006.01)  *H01J 61/30* (2006.01)
*H01J 65/00* (2006.01)

(86) International application number:
**PCT/JP2006/324149**

(87) International publication number:
**WO 2007/066603 (14.06.2007 Gazette 2007/24)**

(84) Designated Contracting States:
**AT BE BG CH CY CZ DE DK EE ES FI FR GB GR HU IE IS IT LI LT LU LV MC NL PL PT RO SE SI SK TR**

(30) Priority: **07.12.2005 JP 2005353422**

(71) Applicant: **Nippon Electric Glass Co., Ltd. Otsu-shi, Shiga 520-8639 (JP)**

(72) Inventor: **TANAKA, Toshikatsu Shiga 520-8639 (JP)**

(74) Representative: **Tetzner, Michael Anwaltskanzlei Dr. Tetzner Van-Gogh-Strasse 3 81479 München (DE)**

(54) **OUTER CONTAINER FOR EXTERNAL ELECTRODE FLUORESCENT LAMP**

(57) Disclosed is an envelope for external electrode lamps which satisfies every characteristic required for envelopes for external electrode lamps, specifically the thermal expansion coefficient $\alpha$, the liquidus viscosity log $\eta$, the dielectric constant $\varepsilon$, the dielectric loss tangent tan $\delta$, and the volume resistivity log $\rho$. Specifically disclosed is an envelope which is used for producing an external electrode fluorescent lamp having a structure wherein an electrode is arranged outside. This envelope is **characterized by** being composed of a glass containing, in mass %, 45-60% of $SiO_2$, 0-10% of $B_2O_3$, 0-10% of $Al_2O_3$, 0-10% of $MgO$, 0-10% of $CaO$, 0-9% of $SrO$, 5-25% of $BaO$, 0-13% of $ZnO$, 0-5% of $TiO_2$, 0-3% of $CeO_2$, 20-40% of $\Sigma RO(=MgO+CaO+SrO+BaO+ZnO)$ and 5-9.8% $\Sigma R_2O(=Li_2O+Na_2O+K_2O)$.

[FIG. 2]

EP 1 961 710 A1

**Description**

**TECHNICAL FIELD**

The present invention relates to an outer container (envelope) for external electrode fluorescent lamp.

**BACKGROUND ART**

Since a liquid crystal display device does not emit light by itself, when it is applied to laptop personal computers, TV monitors, Personal Computer (PC) monitors, vehicle-mounted instruments and the like, usage of a specific lighting device (hereinafter, referred to as backlight unit) is prevailing.

In a fluorescent lamp as a light source of a backlight unit used in the related art, a compact and long-life cold cathode tube is used. The luminescent principle of the cold cathode tube is the same as a general lighting fluorescent lamp. In other words, an electric power is supplied to internal electrodes via a Dumet wire, Kovar metal, or tungsten metal and the like encapsulated in a glass envelope to cause an electric discharge between the electrodes. With the electric discharge between the electrodes, mercury (Hg) or xenon (Xe) encapsulated in the envelope is excited so that ultraviolet light is radiated. The radiated ultraviolet light causes a fluorescent material applied on an inner wall surface of the envelope to emit visible light. In order to control the current quantity during light emission of the fluorescent lamp, a cold cathode tube unit requires an inverter for increasing the voltage and a capacitor for controlling the electric current for each lamp.

In recent years, the liquid crystal display device is increasingly upsized and, in association therewith, a plurality of the cold cathode tubes are used in the backlight unit for ensuring sufficient brightness. For example, in the case of the TV monitor, the backlight unit in which a plurality of fluorescent lamps are arranged at regular intervals of about 1 to 5 cm and are caused to emit light so that homogeneous light is taken through a diffuser panel is mainly used on the back side of the liquid crystal display device. In the display device in this configuration, the power sources are mounted by the number of the lamps and hence the capacity occupied by the power sources in the display device is significant. Consequently, achievement of a low-profile display device becomes difficult, and the cost is increased. Therefore, integration of the power sources in the unit into one unit is expected, but it has not been possible in the related art since the capacitors cannot be eliminated.

In the cold cathode lamp in the related art, a metal electrode reacts to Hg and forms an alloy and consumes Hg during light-on. Since Hg is a component which contributes to light emission, the cold cathode lamp is gradually lowered in brightness, and becomes unusable at last. In this manner, the lifetime of the cold cathode tube is limited. This lifetime is not sufficient to be used in the TV monitor.

In view of such circumstances, an external electrode fluorescent lamp (EEFL) having electrodes arranged at portions near both ends of an outer peripheral surface of the outer tube of the lamp and having no internal electrode which often affects the lifetime has been studied (For example, Patent Document 1 and Non-Patent Document 1). A flat-type external electrode lamp having a plurality of discharge spaces is also proposed (for example, Patent Documents 2 and 3). In the case of the external electrode fluorescent lamp, a method of supplying the electric power is not emitting electrons directly from the electrodes as in the cold cathode lamp, but causing a glass portion of the glass envelope to function as a dielectric material and causing the electrons to be emitted from the inner surface of the tube by its dielectric characteristics. In other words, the envelope of the lamp is used to establish an alternative mechanism of the capacitor. Consequently, the capacitor is not necessary any longer, and the integration of the power sources is achieved. The fundamental luminescent principle is to generate the the ultraviolet light by Hg or Xe and cause the fluorescent material to emit light in the same manner as the fluorescent lamp in the related art.

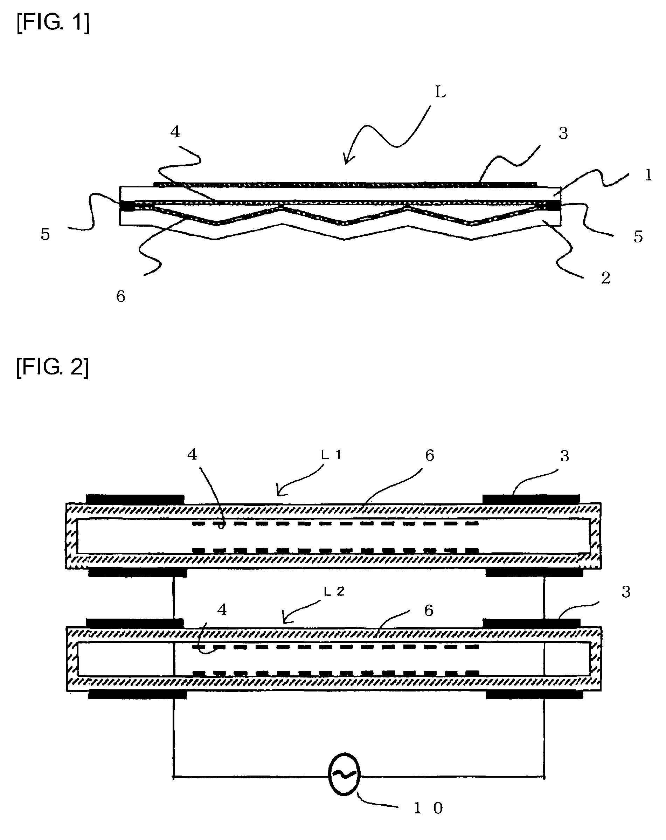

The flat-type external electrode lamp has a structure having electrodes on a surface for taking out light and an outer surface of the lamp on the opposite side. For example, as shown in Fig. 1, the thickness of the plate glass of the backboard 1 functions as a dielectric material, the pair of strip electrodes 3 (external electrodes) function as one of the electrodes, and Hg vapor or Xe in the interior of the lamp functions as the other electrode. This structure is the same as the capacitor. Light is taken out trough a front board 2.

The envelope includes the backboard 1 and the front board 2. The backboard 1 is manufactured by generally known glass plate manufacturing methods such as the float process, the overflow process or the slit down process. The front board 2 is manufactured by generally known glass plate manufacturing methods such as the float process, the overflow process or the slit down process, and then by heat softening press molding with a predetermined metal die. Alternatively, it is manufactured by filling molten glass into a metal die and press molding directly with a predetermined metal die. In the glass plate manufacturing methods as described above, a coefficient of thermal expansion $\alpha$ is an important factor. In other words, when the coefficient of thermal expansion $\alpha$ is too large, the glass plate is broken by a thermal shock in the cooling step during the manufacturing process, so that it becomes difficult to manufacture the same continuously. In the press molding step as well, the frequency of breakage of the molded glass due to the thermal shock during the cooling step after pressing is increased. Furthermore, in recent years, a larger sized envelope is demanded in association with upsizing of the liquid crystal display device, and hence it is necessary to manufacture larger sized glass plates. Therefore, it is conceivable that the frequency of breakage due to the thermal shock further increases.

The tube-type external electrode lamp has a structure having electrodes on the outer peripheral surface of the envelope. As shown in Fig. 2, the thickness of the glass of a glass tube (outer tube) 6 functions as the dielectric material, the external electrode 3 functions as one of the electrodes, and the Hg vapor or Xe in the interior of the lamp functions as the other electrode 3. This structure is the same as that of the capacitor. When connecting a plurality of lamps L1, L2 to one electric power 10, the voltages of the lamps are the same.

The envelope includes the glass tube 6. The glass tube 6 is manufactured by generally known glass tube manufacturing methods such as Danner process, the down-draw process, or the up-draw process. The coefficient of thermal expansion $\alpha$ is also an important factor in the glass tube manufacturing method as well. When the coefficient of thermal expansion $\alpha$ is too large, the glass tube is broken by the thermal shock in the cooling step during the manufacturing process, so that it becomes difficult to manufacture the same continuously. It is conceivable that the frequency of breakage is increased in the cooling step after the thermal softening and sealing of the glass tube or in the cooling step after the thermal work such as thermal softening and bending of the glass tube in the fluorescent lamp manufacturing process.

Therefore, it is desired that the coefficient of thermal expansion $\alpha$ of the glass which constitutes the envelope is not too high and, more specifically, is equal to or less than $90 \times 10^{-7}/°C$ in the envelope of any types. In the external electrode fluorescent lamp, it is not necessary to tightly seal the electrodes formed of the Dumet wire, the Kovar metal or the tungsten metal and the like with the glass. Therefore, although the coefficient of thermal expansion $\alpha$ of glass used for the envelope is arbitrary, the lower coefficient of thermal expansion $\alpha$ is preferable from the reasons described above.

In the forming process from the molten glass to the glass plate and the glass tube, it is important that devitrification does not occur due to crystal precipitation depending on the forming viscosity. The viscosity which causes the crystal precipitation is expressed by the liquidus viscosity log $\eta$, and it is understood to be formable when the liquidus viscosity log $\eta$ is larger than the forming viscosity. A liquidus viscosity log $\eta$ of at least 5.2 is preferable in the normal forming of the glass plate and the glass tube.

In the external electrode fluorescent lamp, the supply of the electric power to the lamp is carried out by driving the above-described capacitor mechanism by an AC power source. The brightness of the lamp depends on the electric energy. The electric energy (electric charge Q) of the capacitor is obtained from an electric capacity C and an terminal voltage V (shown below).

$$Q = C \times V \ ... \ \text{Expression 1}$$

[Q: electric charge, C: electric capacity, V: terminal voltage]

As is clear from Expression 1, it can be said that the electric capacity C determines the electric charge Q. The electric capacity C is a product of a dielectric constant $\varepsilon$ and a surface area S and an inverse number of the thickness d (expression shown below).

$$C = \varepsilon \times S \times (1/d) \ ... \ \text{Expression 2}$$

[C: electric capacity, E: dielectric constant,
S: surface area, d: derivative thickness]

From Expression 1 and Expression 2, Expression 3 is derived.

$$Q = \varepsilon \times S \times (1/d) \times V \ ... \ \text{Expression 3}$$

As is clear from Expression 3, when the terminal voltage V, the electrode area D and the derivative thickness d are constant, the electric charge Q increases with the dielectric constant $\varepsilon$, and hence the lamp efficiency of the external electrode fluorescent lamp is enhanced. When the electric charge Q is constant, the required terminal voltage V is decreased with increase of the dielectric constant $\varepsilon$, so that the power consumption is saved. Since the thickness of the glass of the envelope of the external electrode fluorescent lamp functions as the dielectric material, the high dielectric constant $\varepsilon$ of the glass, more specifically, and the dielectric constant $\varepsilon$ of 6.5 or more at 1MHz and a room temperature are desired.

The dielectric loss increases when a dielectric dissipation factor $\tan \delta$ is large. The dielectric loss is converted into heat energy, and hence glass starts to generate heat by itself when the dielectric loss is large. When the generation of heat continues, the glass is thermally softened, so that there is a risk of formation of a hole at an electrode portion of the lamp. Therefore, a small dielectric dissipation factor, more specifically, and a dielectric dissipation factor $\tan \delta$ of 0.003 or less at 1 MHz and the room temperature are desired.

Furthermore, the fluorescent lamp is used at a frequency from 40 KHz to 100 KHz, the dielectric characteristics in this frequency range is also important. The dielectric dissipation factor $\tan \delta$ has a tendency to decrease with the increase of the frequency. In other words, the dielectric dissipation factor $\tan \delta$ at 40 KHz is higher than that at 100 KHz. Therefore, the dielectric characteristics of the envelope glass are defined by the value of 40 KHz. The dielectric constant $\varepsilon$ is desired to be 7.0 or more at 40 KHz, the dielectric dissipation factor $\tan \delta$ is desired to be 0.01 or less at 150°C, 0.02 or less at 250°C, and 0.1 or less at 350°C, respectively. Furthermore, the temperature of 150°C corresponds to the normal operating temperature of the lamp. The temperature of 250°C corresponds to a temperature which may be generated in the interior of the lamp. The temperature of 350°C is a temperature to be considered in terms of safety. The highest temperature possible for the fluorescent lamp among these temperatures is on the order of 250°C, the value at this temperature is considered to be the most important.

In the external electrode fluorescent lamp, the terminal voltage is high. Therefore, if a specific volume resistance $\log \rho$ of the glass is too low, an electric current flows to the glass, which results in lowering of the lamp efficiency. In addition, there is a risk of deformation of the envelope or of firing of peripheral members or the like due to Joule heat. Therefore, a high specific volume resistance $\log \rho$, more specifically, values higher than 9.5 are desired.

Patent Document 1: JP-A-2002-8408
Patent Document 2: JP-A-2002-508574
Patent Document 3: JP-A-2000-156199
Non Patent Document 1: Journal of the Illuminating Engineering Institute of Japan, vol 87, No. 1 2003 p.18

## DISCLOSURE OF THE INVENTION

In the related art, commercially available borosilicate glass tubes or soda glass tubes, which are used as an outer tube of the cold cathode lamp, are diverted to the envelope of the external electrode lamp. The borosilicate glass of this type has a coefficient of thermal expansion $\alpha$ on the order of 30 to $60 \times 10^{-7}$/°C, which allows tight sealing with Kovar metal or tungsten metal which is used for electrodes of the cold cathode lamp. The above-described soda glass has a coefficient of thermal expansion $\alpha$ on the order of 90 to $100 \times 10^{-7}$/°C, which allows tight sealing with the Dumet metal which is used as the electrodes of the cold cathode lamp.

However, in the case of the external electrode lamp manufactured using the outer tube of the cold cathode lamp, since the envelope glass does not have adequate dielectric characteristics, a high-performance lamp cannot be obtained. In other words, when the borosilicate glass tube is used, since the dielectric constant is low, there is a problem that the lamp efficiency is low. In contrast, when the soda glass tube is used, since the lamp efficiency is high but the dielectric loss is large, an inconvenience such that a hole is formed at the electrode portion by the heat generation of the glass occurs.

It is an object of the present invention is to provide an envelope for external electrode lamp which satisfies various characteristics required as the envelope for external electrode lamp, more specifically, all the coefficient of thermal expansion $\alpha$, the liquidus viscosity $\log \eta$, the dielectric constant $\varepsilon$, the dielectric dissipation factor $\tan \delta$ and the specific volume resistance $\log \rho$.

After having devoted ourselves to study, the inventors found that the above-described objects are achieved by selecting a glass composition within a specific range and propose as the present invention.

In other words, the envelope for external electrode lamp according to the present invention is an envelope used for manufacturing an external electrode lamp having a structure in which electrodes are provided on the outer surface thereof, and is characterized by being formed of glass containing 45 to 60% $SiO_2$, 0 to 10% $B_2O_3$, 0 to 10% $Al_2O_3$, 0 to 10% MgO, 0 to 10% CaO, 0 to 9% SrO, 5 to 25% BaO, 0 to 13% ZnO, 0 to 5% $TiO_2$, 0 to 3% $CeO_2$, 20 to 40% $\Sigma$RO (=MgO+CaO+SrO+BaO+ZnO), and 5 to 9.8% $\Sigma R_2O$(=$Li_2O+Na_2O+K_2O$) by mass.

Hereinafter, "%" means "percent by mass" unless otherwise specified.

(Advantage of the Invention)

The envelope for external electrode lamp according to the present invention is formed of glass which satisfies all the characteristics required as the envelope (more specifically, a coefficient of thermal expansion $\alpha$ of 70 to 90 $\times$ $10^{-7}/°C$ at 30 to 380°C and a liquidus viscosity log $\eta$ of 5.2 or more, a dielectric constant $\varepsilon$ of 6.5 or more and a dielectric dissipation factor tan $\delta$ of 0.003 or less at 1 MHz and the room temperature, a specific volume resistance log $\rho$ of 9.5 or more at 250°C, a dielectric constant $\varepsilon$ of 7 or more and a dielectric dissipation factor tan $\delta$ of 0.01 or less at 40 KHz and 150°C, a dielectric constant $\varepsilon$ of 7 or more and a dielectric dissipation factor tan $\delta$ of 0.02 or less at 40 KHz and 250°C, a dielectric constant $\varepsilon$ of 7 or more and a dielectric dissipation factor tan $\delta$ of 0.1 or less at 40KHz and 350°C), therefore, the devitrification or damage of the glass is hardly occur in the manufacturing process of the envelope. In addition, the lamp efficiency of the external electrode lamp manufactured using the envelope is high, and the problem of formation of the hole at the electrode portion due to the heat generation of the glass during light-on is hardly occurred.

## BRIEF DESCRIPTION OF THE DRAWINGS

Fig. 1 is an explanatory drawing showing a flat-type external electrode fluorescent lamp.
Fig. 2 is an explanatory drawing showing a tube-type external electrode fluorescent lamp.
Fig. 3 is an explanatory drawing showing a sample for measuring dielectric characteristics, in which (a) is a side view of the sample, and (b) is a bottom view of the sample.
Fig. 4 is an explanatory drawing showing an apparatus for measuring the dielectric characteristics.

## DESCRIPTION OF THE REFERENCE NUMERALS AND SIGNS

| 1... | envelope backboard |
|------|--------------------|
| 2... | envelope front board |
| 3... | electrode |
| 4... | fluorescent material |
| 5... | spacer |
| 6... | outer tube |
| 10... | electric power |
| L, L1, L2... | external electrode fluorescent lamp |

## BEST MODE FOR CARRYING OUT THE INVENTION

An envelope according to the present invention is an envelope used for manufacturing an external electrode fluorescent lamp having a structure in which electrodes are provided on the outer surface thereof. The container may be formed into a shape suitable for the shape of a lamp.
For example, in the case of a tube-type lamp, the envelope has a tube shape. The tube shape here is not limited to the shape being circle in cross section, and means a column-shaped member having various cross-sectional shapes such as oval.
In the case of a flat-type lamp, the envelope has a substantially box shape so as to define one or more charging spaces. The envelope is preferably composed of a plurality of members from a limit of manufacture and may be composed of, for example, members separate for the back surface portion and the front surface portion, that is, a front board and a backboard. When defining a plurality of the charging spaces, for example, a plurality of depressions and projections may be provided on the front board and/or the backboard.
The envelope according to the present invention is formed of glass containing 45 to 60% $SiO_2$, 0 to 10% $B_2O_3$, 0 to 10% $Al_2O_3$, 0 to 10% MgO, 0 to 10% CaO, 0 to 9% SrO, 5 to 25% BaO, 0 to 13% ZnO, 0 to 5% $TiO_2$, 0 to 3% $CeO_2$, 20 to 40% $\Sigma RO(=MgO+CaO+SrO+BaO+ZnO)$, and 5 to 9.8% $\Sigma R_2O(=Li_2O+Na_2O+K_2O)$ by mass. The reason why the range of composition of the glass is limited as described above will be described below.
$SiO_2$ is a main component required for constituting the network of the glass, and the mechanical strength of glass increases with the amount of $SiO_2$ contained therein. On the other hand, it has a tendency to increase the viscosity, too much $SiO_2$ makes melting and forming of the glass difficult. The content is 45% or more, more preferably, 48% or more. Alternatively, it is 60% or less, more preferably, 58% or less. When $SiO_2$ is contained by 45% or more, a mechanical strength of a usable level is ensured. When $SiO_2$ is contained by 48% or more, a mechanical strength which can resist a continuous manufacture in the glass plate and glass tube manufacturing process is obtained. When $SiO_2$ is contained by 60% or less, it does not take long time for melting glass, and hence the productivity is not impaired. When it is contained by 58% or less, thermal working in the press molding process of the glass plate and the fluorescent lamp manufacturing step is carried out smoothly.

$B_2O_3$ is a component which constitutes the network of the glass, and is a component effective for improving the melting property of the glass, and lowering the viscosity since the melting temperature is low. In contrast, when too much $B_2O_3$ is contained, it splits the phase of the glass, so that forming of glass becomes difficult. The content is 10% or less and, preferably, 8% or less, and more preferably, 7.5 % or less. When the content of $B_2O_3$ is 10% or less, the glass plate and glass tube may be manufactured without causing devitrification in manufacturing process and, when it is 8% or less, the continuous stable production is achieved for a longer time.

$Al_2O_3$ is a component which constitutes the network of the glass, and has effects to improve the stability of glass and to restrain the devitrification of glass. On the other hand, since it has a tendency to increase the viscosity, too much $Al_2O_3$ makes forming of the glass difficult. The content of $Al_2O_3$ is 10% or less, preferably 8% or less, and more preferably, 7% or less. When the content of $Al_2O_3$ is 10% or less the viscosity of molten glass does not increase too much, and hence melting of glass and forming of glass plates and glass tubes become easy. When the content is 7% or less, the heat processing in the glass plate press molding step or the fluorescent lamp manufacturing step are carried out smoothly.

MgO and CaO are components to be filled in interstitial space in the glass network. These components have an effect to improve the melting property of glass without increasing the coefficient of thermal expansion $\alpha$ of the glass significantly, and have an effect to improve the dielectric characteristics. On the other hand, these components increase the crystallization tendency, and hence are the components to accelerate the devitrification of glass. When the contents are too much, the coefficient of thermal expansion $\alpha$ is increased.

The contents of MgO and CaO are 10% or less, respectively, and preferably, are 8% or less, respectively. When the content of MgO or CaO is 10% or less, the devitrification of the glass plate and the glass tube are hardly occurred in the manufacturing process, and the production in the industry level is enabled. Since the excessive increase in coefficient of thermal expansion $\alpha$ is avoided, the frequency of breakage due to the thermal shock is lowered. When the content of MgO or CaO is 8% or less, respectively, the continuous stable production is achieved for a longer time. Increase in coefficient of thermal expansion $\alpha$ is further restrained, and the frequency of breakage due to the thermal shock is further lowered.

SrO and BaO are components to be filled in the gap in the glass network. These components have an effect to improve the melting property of glass without increasing the coefficient of thermal expansion $\alpha$ of the glass significantly, have an effect to improve the dielectric characteristics. BaO, in particular, has a large effect to improve the dielectric characteristics. On the other hand, these components precipitate crystal and hence increase the devitrification of glass. When the contents are too much, the coefficient of thermal expansion $\alpha$ is increased.

The content of SrO is 9% or less and, preferably, 8% or less. When the content of SrO is 9% or less, the devitrification of glass plate and glass tube are hardly occurred in the manufacturing process, and the production in the industry level is enabled. Since the excessive increase in coefficient of thermal expansion $\alpha$ is avoided, the frequency of breakage due to the thermal shock is lowered. When the content of SrO is 8% or less, no devitrification occurs and the continuous stable production is achieved for a long time. Increase in coefficient of thermal expansion $\alpha$ is further restrained, and the frequency of breakage due to the thermal shock is further lowered. SrO is not an essential component, but it is preferable to contain SrO by 0.5% or more, more preferably, by 1% or more.

The content of BaO is 5% or more and, preferably, 7.5% or more, and is also 25% or less, preferably, 23% or less, and more preferably, 22.5% or less. When the content of BaO is 5% or more, an effect to increase the dielectric constant $\varepsilon$ is and decrease the dielectric dissipation factor tan $\delta$ is achieved. When it is 7.5% or more, the effect to increase the dielectric constant $\varepsilon$ and decrease the dielectric dissipation factor tan $\delta$ is remarkably improved. When the content of BaO is 25% or less, occurrence of the devitrification of the glass plate and the glass tube are restrained in the manufacturing process, and the production in the industry level is enabled. Since the excessive increase in coefficient of thermal expansion $\alpha$ is avoided, the frequency of breakage due to the thermal shock is lowered. When it is 23% or less, the continuous stable production is achieved for a long time. The increase in coefficient of thermal expansion $\alpha$ is further restrained, and the frequency of breakage due to the thermal shock is further lowered.

ZnO is a component to be filled in the gap in the glass network and is a component to restrain precipitation of crystal of alkali earth metal oxides (MgO, CaO, SrO, BaO) and $SiO_2$. It is also a component effective to improve the dielectric characteristics. On the other hand, when the content of ZnO is too much, the probability of precipitation of the crystal including ZnO is increased, so that the tendency of occurrence of devitrification of glass is increased. The content of ZnO is 13% or less, and preferably, 12% or less. When the content of ZnO is 13% or less, the occurrence of the devitrification of glass plates and glass tubes in the manufacturing process is retrained, and the production in the industry level is enabled. When the content of ZnO is 12% or less, the continuous stable production is achieved for a long time. ZnO is not an essential component, but it is preferable to contain ZnO by 0.5% or more, more preferably, by 1% or more.

The dielectric characteristics of the glass are roughly estimated by $\Sigma RO$ (the total content of MgO, CaO, SrO, BaO and ZnO). In other words, the dielectric characteristics are improved with increase of the total content which results in increase in dielectric constant $\varepsilon$ and decrease in dielectric dissipation factor $\tan \delta$. In contrast, when the total content is too much, probability of crystal precipitation is increased. $\Sigma RO$ is 20% or more and, preferably, 25% or more. When $\Sigma RO$ is 20% or more, the dielectric characteristics required as the envelope for the external electrode lamp are satisfied. When it is 25% or more, a sufficiently high dielectric constant is obtained and hence the required electric power to be supplied to the lamp terminal is low, so that the power consumption is reduced. In contrast, when $\Sigma RO$ is 40% or less, the devitrification of the glass plate and the glass tube are hardly occurred in the manufacturing process, and the production in the industry level is enabled. When it is 38% or less, the continuous stable production is achieved for a long time.

Alkali metal oxides such as $Li_2O$, $Na_2O$ and $K_2O$ are components to be filled in the gap in the glass network. These components function as melting agent which accelerates raw materials of glass to melt and have an effect to facilitate melting of glass. They are also components having a tendency to improve the dielectric constant $\varepsilon$. In contrast, when the content thereof is increased, the dielectric dissipation factor $\tan \delta$ is increased, the volume electric resistance $\log \rho$ is decreased and the coefficient of thermal expansion $\alpha$ is increased. Therefore, the total content of these components $Li_2O+Na_2O+K_2O(=\Sigma R_2O)$ is in the range from 5% to 9.8% inclusive. When the value of $\Sigma R_2O$ is 5% or more, the production is stabilized without any problem in melting the raw materials in glass melting, and the tendency to improve the dielectric constant $\varepsilon$ is also increased. When it is 9.8% or less, excessive increase in coefficient of thermal expansion $\alpha$ is avoided, and excessive increase in dielectric dissipation factor $\tan \delta$ and specific volume resistance $\log \rho$ is also avoided.
In order to restrain increase in dielectric dissipation factor $\tan \delta$ or specific volume resistance $\log \rho$ without reducing the alkali content, an alkali mixing effect may be employed. In order to do so, the contents of the individual components are preferably adjusted to a range from 0 to 5%, preferably, from 0 to 3% for $Li_2O$, from 0.1 to 8%, preferably, from 0.3 to 5% for $Na_2O$, and from 0.5 to 8%, more preferably, from 1 to 7% for $K_2O$.

When the contents especially of $Li_2O$ and $Na_2O$ from among alkali metal oxides are excessively increased, the specific volume resistance $\log \rho$ is increased. Therefore, in order to obtain the alkali mixing effect adequately, it is preferred to adjust the $Li_2O/\Sigma R_2O$ to 0.4 or less and $Na_2O/\Sigma R_2O$ to 0.6 or less. When the ratios of these components are within the ranges shown above, the effect of restraining increase in specific volume resistance $\rho$ is significant, which is preferable.

The dielectric constant $\varepsilon$ of glass is estimated by $(\Sigma RO+\Sigma R_2O) / (SiO_2+B_2O_3+Al_2O_3)$. In other words, the dielectric constant increases with these ratios. In order to improve the dielectric constant $\varepsilon$ of glass, it is effective to fill alkali metal ion (Li ion, Na ion, K ion and so on) and alkali earth metal ion (Mg ion, Ca ion, Sr ion, Ba ion and so on), or Zn ion tightly in the gap in the glass network. The ratio of $(\Sigma RO+\Sigma R_2O)/(SiO_2+B_2O_3+Al_2O_3)$ is preferably 0.55 or higher. When the ratio is lower than 0.55, the effect to improve the dielectric constant $\varepsilon$ is small. However, the ratio higher than 0.85 is not preferable since the coefficient of thermal expansion $\alpha$ increases excessively.
The larger the atomic number of the element is, the larger the effect to improve the dielectric constant $\varepsilon$ becomes. In other words, in $R_2O$, $K_2O$ has the largest effect to improve the dielectric constant and then $Na_2O$ follows. In RO, BaO has the largest effect, and then SrO and ZnO follow. Therefore, it is preferable to select these components preferentially or use.

$TiO_2$ is a component which demonstrates an effect to improve the dielectric constant $\varepsilon$ when being coexisted with alkali earth oxide. It is also a component which has an effect to block ultraviolet light generated by the lamp. In contrast, when the content is too much, crystal of $TiO_2$ is precipitated, and hence it hinders glass formation. When the content of $TiO_2$ is 5% or less, a stable glass forming is achieved without causing the precipitation of the crystal of $TiO_2$.

$CeO_2$ is a component having an effect to block ultraviolet light generated from the lamp. It is also a component of a clarifying agent when melting glass. In contrast, when the content thereof is increased, the glass is colored in yellow, which is not preferable as the envelope. Therefore, the content of $CeO_2$ is limited to 3% or less. When it exceeds 3%, the glass is remarkably colored in yellow, which is not preferable.

$WO_3$ and $Nb_2O_5$ are also components which have an effect to block the ultraviolet light generated by the lamp, and may be added to 3% as needed, respectively. These components are also effective for improving the dielectric constant $\varepsilon$ since they are filled in the gap in the glass network. However, when it is 3% or more, the glass is devitrified, which is not preferable.

In addition to the components shown above, various components such as $ZrO_2$, $Fe_2O_3$, $Sb_2O_3$, $As_2O_3$, PbO, $Y_2O_3$, $Ga_2O_3$, $MoO_3$, rare earth oxides or lanthanoid oxides, which are considered to improve the dielectric constant $\varepsilon$ by being filled in the gap in the glass network, may be added. In addition, $SO_2$, $Cl_2$ and the like may be contained by 1% or less, respectively, as the clarifying agent.
In the envelope according to the present invention, a preferable composition range of glass which constitutes the container is 45 to 60% $SiO_2$, 0 to 8% $B_2O_3$, 0 to 8% $Al_2O_3$, 0 to 8% MgO, 0 to 8% CaO, 0 to 8% SrO, 7.5 to 25% BaO, 0 to 12% ZnO, 0 to 5% $TiO_2$, 0 to 3% $CeO_2$, 25 to 40% $\Sigma RO$ (=MgO+CaO+SrO+BaO+ZnO), and 5 to 9.8% $\Sigma R_2O$

(=$Li_2O+Na_2O+K_2O$) by mass and, a more preferably composition range is 48 to 58% $SiO_2$, 0 to 7.5% $B_2O_3$, 0 to 7% $Al_2O_3$, 0 to 8% MgO, 0 to 8% CaO, 0 to 8% SrO, 7.5 to 22.5% BaO, 0 to 12% ZnO, 0 to 5% $TiO_2$, 0 to 2% $CeO_2$, 25 to 38% ΣRO (=MgO+CaO+SrO+BaO+ZnO), and 5 to 9.8% Σ$R_2O$ (=$Li_2O+Na_2O+K_2O$) by mass.

Subsequently, a method of manufacturing the envelope for external electrode fluorescent lamp according to the present invention will be described.

First of all, a case of manufacturing the tubular-shaped envelope will be described.

Raw materials are blended to obtain the composition described above. After having mixed, the mixture is melt in a melting furnace. At this time, the amount of moisture in the glass is adjusted as needed. Then, the molten glass is formed into a tubular shape using tube-drawing methods such as the Danner process, the down-draw process or the up-draw process. Then, the tubular glass is cut into a predetermined length and is applied with a post-process as needed, so that the envelope for external electrode fluorescent lamp is obtained.

Subsequently, a method of manufacturing the flat-type envelope will be described.

The raw materials are blended to obtain the composition described above. After having mixed, the mixture is melt in the melting furnace. At this time, the amount of moisture in the glass is adjusted as needed. Then, the molten glass is formed into a plate shape using the methods such as an overflow process, a float process or a slot down process. Subsequently, the plate glass is cut into predetermined dimensions and is applied with a post-process as needed, so that the backboard is obtained. The plate glass manufactured in the same manner is reformed by pressing or the like to form one or a plurality of depressions, which function as charging spaces. The front board is obtained in this manner. Subsequently, the front board and the backboard are tightly sealed using a sealing material or the like. It is also possible to apply fluorescent material at predetermined portions of the front board and the backboard. In this manner, the flat-type envelope for external electrode fluorescent lamp having one or a plurality of discharging spaces is obtained.

The external electrode fluorescent lamp is manufactured using the obtained envelope according to a general method. Prior to assembly of the fluorescent lamp, electrodes may be formed on an outer surface of the envelope, for example, at portions near both ends thereof in the case of the tubular-shaped envelope, and on the backboard when it is a flat-type envelope, respectively.

EXAMPLE 1

The present invention will be described below on the basis of Examples. Tables 1 to 3 show examples of glass which constitutes the envelope according to the present invention (sample Nos. 1 to 13), and Tables 4 to 6 show comparative examples (Nos. 14 to 24).

[Table 1]

| | 1 | 2 | 3 | 4 |
|---|---|---|---|---|
| $SiO_2$ | 52.8 | 48.6 | 53.9 | 57.1 |
| $Al_2O_3$ | 1.0 | 6.5 | 0.4 | 1.2 |
| $B_2O_3$ | 5.0 | 1.0 | 6.9 | 2.4 |
| MgO | 4.0 | 3.0 | 1.5 | 7.3 |
| CaO | 0.2 | 3.8 | 1.6 | 0.6 |
| SrO | 4.5 | 6.0 | 7.6 | 5.6 |
| BaO | 16.3 | 19.8 | 17.2 | 14.5 |
| ZnO | 7.0 | 4.0 | 5.0 | 2.0 |
| $Li_2O$ | 1.3 | 2.4 | 0.6 | 0.3 |
| $Na_2O$ | 2.6 | 1.7 | 2.8 | 1.8 |
| $K_2O$ | 4.0 | 3.0 | 1.7 | 4.4 |
| $TiO_2$ | 1.2 | 0.2 | 0.7 | 2.8 |
| $CeO_2$ | 0.2 | | 0.1 | |
| ΣRO | 32.0 | 36.6 | 32.9 | 30.0 |
| Σ$R_2O$ | 7.9 | 7.1 | 5.1 | 6.5 |
| Li/Σ$R_2O$ | 0.16 | 0.34 | 0.12 | 0.05 |
| Na/Σ$R_2O$ | 0.33 | 0.24 | 0.55 | 0.28 |
| (ΣRO+Σ$R_2O$) / ($SiO_2$ +$Al_2O_3$+$B_2O_3$) | 0.68 | 0.78 | 0.62 | 0.60 |

[Table 2]

|  | 5 | 6 | 7 | 8 |
|---|---|---|---|---|
| $SiO_2$ | 54.5 | 50.2 | 55.3 | 52.7 |
| $Al_2O_3$ | 1.6 | 0.8 | 1.1 |  |
| $B_2O_3$ | 0.3 | 7.4 | 5.2 | 3.5 |
| MgO | 0.2 | 2.6 | 3.7 | 6.0 |
| CaO | 2.0 | 4.3 |  | 1.5 |
| SrO | 3.5 | 1.1 | 6.9 | 5.3 |
| BaO | 21.8 | 15.5 | 10.2 | 7.6 |
| ZnO | 4.0 | 10.7 | 7.0 | 11.3 |
| $Li_2O$ | 1.3 | 1.1 | 1.2 | 1.2 |
| $Na_2O$ | 3.7 | 1.1 | 3.0 | 3.5 |
| $K_2O$ | 3.6 | 3.8 | 5.2 | 5.1 |
| $TiO_2$ | 3.4 | 1.3 | 1.0 | 1.8 |
| $CeO_2$ |  | 0.1 | 0.2 | 0.5 |
| $Sb_2O_3$ | 0.1 |  |  |  |
| $\Sigma RO$ | 31.5 | 34.2 | 27.8 | 31.7 |
| $\Sigma R_2O$ | 8.6 | 6.0 | 9.4 | 9.8 |
| $Li/\Sigma R_2O$ | 0.15 | 0.18 | 0.13 | 0.12 |
| $Na/\Sigma R_2O$ | 0.43 | 0.18 | 0.32 | 0.36 |
| $(\Sigma RO + \Sigma R_2O)/(SiO_2 + Al_2O_3 + B_2O_3)$ | 0.71 | 0.69 | 0.60 | 0.74 |

[Table 3]

|  | 9 | 10 | 11 | 12 | 13 |
|---|---|---|---|---|---|
| $SiO_2$ | 55.0 | 51.3 | 51.6 | 52.1 | 52.9 |
| $Al_2O_3$ | 2.6 | 3.2 | 0.8 | 5.3 | 1.8 |
| $B_2O_3$ |  | 4.6 | 7.8 | 2.8 | 5.5 |
| MgO | 5.1 |  | 6.8 | 4.0 | 3.5 |
| CaO | 0.8 | 1.0 | 1.8 | 7.5 | 0.2 |
| SrO | 4.2 | 7.8 |  | 4.7 | 6.0 |
| BaO | 13.8 | 13.2 | 11.6 | 12.6 | 15.2 |
| ZnO | 6.2 | 8.2 | 9.2 |  | 7.3 |
| $Li_2O$ |  | 1.8 | 2.3 | 0.9 | 1.5 |
| $Na_2O$ | 2.6 | 3.1 |  | 4.2 | 2.4 |
| $K_2O$ | 4.0 | 4.3 | 3.7 | 3.1 | 3.4 |
| $TiO_2$ | 4.3 | 1.2 | 4.2 | 2.3 |  |
| $CeO_2$ | 1.3 | 0.2 |  | 0.1 | 0.3 |
| $ZrO_2$ | 0.1 | 0.1 |  | 0.2 |  |
| $Sb_2O_3$ |  |  | 0.2 | 0.2 |  |
| $\Sigma RO$ | 30.1 | 30.2 | 29.4 | 28.8 | 32.2 |
| $\Sigma R_2O$ | 6.6 | 9.2 | 6.0 | 8.2 | 7.3 |
| $Li/\Sigma R_2O$ |  | 0.20 | 0.38 | 0.11 | 0.21 |
| $Na/\Sigma R_2O$ | 0.39 | 0.34 |  | 0.51 | 0.33 |
| $(\Sigma RO + \Sigma R_2O)/(SIO_2 + Al_2O_3 + B_2O_3)$ | 0.64 | 0.67 | 0.59 | 0.61 | 0.66 |

[Table 4]

|  | 14 | 15 | 16 | 17 |
|---|---|---|---|---|
| $SiO_2$ | 70.5 | 65.0 | 55.0 | 70.0 |
| $Al_2O_3$ | 0.1 | 5.0 | 9.0 | 2.0 |
| $B_2O_3$ |  | 20.0 |  | 1.0 |
| MgO |  |  | 2.0 | 4.5 |
| CaO | 7.0 |  | 2.0 | 4.5 |
| S r O |  |  | 10.0 |  |
| BaO | 2.0 |  | 10.0 |  |
| ZnO | 4.0 |  |  |  |
| $Li_2O$ |  | 1.0 |  |  |
| $Na_2O$ | 8.0 | 1.5 | 5.0 | 16.0 |
| $K_2O$ | 8.0 | 7.0 | 7.0 | 2.0 |
| $TiO_2$ | 0.4 | 0.5 |  |  |
| $CeO_2$ |  |  |  |  |
| $\Sigma RO$ | 13.0 | 0.0 | 24.0 | 9.0 |
| $\Sigma R_2O$ | 16.0 | 9.5 | 12.0 | 18.0 |
| $Li/\Sigma R_2O$ | 0.0 | 0.11 | 0.0 | 0.0 |
| $Na/\Sigma R_2O$ | 0.5 | 0.16 | 0.42 | 0.89 |
| $(\Sigma RO+\Sigma R_2O)/(SiO_2 +Al_2O_3+B_2O_3)$ | 0.41 | 0.11 | 0.56 | 0.37 |

[Table 5]

|  | 18 | 19 | 20 | 21 |
|---|---|---|---|---|
| $SiO_2$ | 52.2 | 56.7 | 50.1 | 48.2 |
| $Al_2O_3$ | 3.2 | 1.7 |  | 5.0 |
| $B_2O_3$ | 0.8 |  | 0.3 | 6.6 |
| MgO | 6.4 | 1.4 |  | 2.7 |
| CaO |  |  | 5.7 |  |
| SrO | 9.3 |  | 8.3 | 7.5 |
| BaO | 15.8 | 26.9 | 9.7 | 10.5 |
| ZnO |  | 4.8 | 14.1 | 6.0 |
| $Li_2O$ | 2.6 |  |  | 2.2 |
| $Na_2O$ | 1.3 | 3.4 | 3.5 | 3.8 |
| $K_2O$ | 5.8 | 4.6 | 5.1 | 6.5 |
| $TiO_2$ | 2.3 | 0.5 | 3.2 | 1.0 |
| $CeO_2$ |  |  |  |  |
| $Sb_2O_3$ | 0.3 |  |  |  |
| $\Sigma RO$ | 31.5 | 33.1 | 37.8 | 26.7 |
| $\Sigma R_2O$ | 9.7 | 8.0 | 8.6 | 12.5 |
| $Li/\Sigma R_2O$ | 0.27 |  |  | 0.18 |
| $Na/\Sigma R_2O$ | 0.13 | 0.43 | 0.41 | 0.30 |
| $(\Sigma RO+\Sigma R_2O)/(SiO_2 +Al_2O_3+B_2O_3)$ | 0.73 | 0.70 | 0.92 | 0.66 |

[Table 6]

|  | 22 | 23 | 24 |
|---|---|---|---|
| $SiO_2$ | 56.0 | 56.2 | 51.7 |
| $Al_2O_3$ |  | 0.4 | 1.6 |
| $B_2O_3$ | 3.5 | 6.9 | 0.3 |
| MgO | 6.0 | 1.5 | 0.2 |
| CaO | 1.5 | 1.6 | 2.0 |
| SrO | 5.3 | 7.6 | 3.5 |
| BaO | 4.3 | 17.2 | 21.8 |
| ZnO | 11.3 | 5.0 | 4.0 |
| $Li_2O$ | 1.2 | 0.6 | 3.8 |
| $Na_2O$ | 3.5 | 1.0 | 2.2 |
| $K_2O$ | 5.1 | 1.2 | 2.6 |
| $TiO_2$ | 1.8 | 0.7 | 6.2 |
| $CeO_2$ | 0.5 | 0.1 |  |
| $Sb_2O_3$ |  |  | 0.1 |
| $\Sigma RO$ | 28.4 | 32.9 | 31.5 |
| $\Sigma R_2O$ | 9.8 | 2.8 | 8.6 |
| $Li/\Sigma R_2O$ | 0.12 | 0.21 | 0.44 |
| $Na/\Sigma R_2O$ | 0.36 | 0.36 | 0.26 |
| $(\Sigma RO+\Sigma R_2O)/(SiO_2+Al_2O_3+B_2O_3)$ | 0.64 | 0.56 | 0.75 |

After having blended raw materials of glass to obtain the compositions as shown in the tables, the blended materials were melt using a platinum pot at 1500°C for five hours. After having melted, the molten glass was formed and machined into a predetermined shape to prepare respective glass samples. The raw materials may be natural mineral, oxide, carbonate, sulfate and so on, and may be simply blended considering the analytical value of the raw materials, and the type of the raw material is not limited.

Subsequently, various characteristics of the obtained glass samples were evaluated. The results are shown in tables.

[Table 7]

|  | 1 | 2 | 3 | 4 |
|---|---|---|---|---|
| Coefficient of Thermal Expansion $\alpha$ [30-380°C] $\times 10^{-7}$/°C | 80 | 88 | 71 | 74 |
| Liquidus Viscosity log $\eta$ dPa $\cdot$ s | 5.8 | 5.3 | 5.2 | 5.6 |
| Specific Volume Resistance log $\rho$ [250°C] $\Omega \cdot$ cm | 10.9 | 10.4 | 11.2 | 10.4 |
| Dielectric Constant $\varepsilon$ |  |  |  |  |
| 1MHz Room Temperature | 7.2 | 7.4 | 7.1 | 7.1 |
| 40KHz 150°C | 7.9 | 8.6 | 7.6 | 7.4 |
| 40KHz 250°C | 8.0 | 8.7 | 7.7 | 7.6 |
| 40KHz 350°C | 8.4 | 9.3 | 8.0 | 7.9 |
| Dielectric Dissipation Factor $\times 10^{-4}$ |  |  |  |  |
| 1MHz Room Temperature | 10 | 8 | 1 5 | 1 6 |
| 40KHz 150°C | 15 | 13 | 21 | 33 |
| 40KHz 250°C | 50 | 42 | 73 | 99 |
| 40KHz 350°C | 229 | 210 | 264 | 361 |

[Table 8]

| | 5 | 6 | 7 | 8 |
|---|---|---|---|---|
| Coefficient of Thermal Expansion $\alpha$ [30-380°C] $\times$ 10$^{-7}$/°C | 84 | 86 | 82 | 85 |
| Liquidus Viscosity log $\eta$ dPa $\cdot$ s | 5.5 | 5.3 | 5.6 | 5.7 |
| Specific Volume Resistance log $\rho$ [250°C] $\Omega \cdot$ cm | 10.0 | 10.5 | 10.1 | 9.8 |
| Dielectric Constant $\varepsilon$<br>1MHz Room Temperature<br>40KHz 150°C<br>40KHz 250°C<br>40KHz 350°C | 7.2<br>8.3<br>8.5<br>9.2 | 7.3<br>8.4<br>8.5<br>8.9 | 7.1<br>7.5<br>7.9<br>8.5 | 7.2<br>8.5<br>8.6<br>9.0 |
| Dielectric Dissipation Factor $\times$ 10$^{-4}$<br>1MHz Room Temperature<br>40KHz 150°C<br>40KHz 250°C<br>40KHz 350°C | 21<br>52<br>164<br>523 | 13<br>28<br>87<br>302 | 25<br>66<br>192<br>695 | 28<br>70<br>196<br>764 |

[Table 9]

| | 9 | 10 | 11 | 12 | 13 |
|---|---|---|---|---|---|
| Coefficient of Thermal Expansion $\alpha$ [30-380°C] $\times$ 10$^{-7}$/°C | 75 | 81 | 76 | 78 | 79 |
| Liquidus Viscosity log $\eta$ dPa $\cdot$ s | 5.8 | 5.5 | 5.9 | 5.4 | 5.7 |
| Specific Volume Resistance log $\rho$ [250°C] $\Omega \cdot$ cm | 11.1 | 10.0 | 10.3 | 10.1 | 11.1 |
| Dielectric Constant $\varepsilon$<br>1MHz RoomTemperature<br>40KHz 150°C<br>40KHz 250°C<br>40KHz 350°C | 7.1<br>7.8<br>7.9<br>8.3 | 7.2<br>7.7<br>7.8<br>8.1 | 7.0<br>7.5<br>7.9<br>8.3 | 7.1<br>7.4<br>7.7<br>8.2 | 7.1<br>7.8<br>7.9<br>8.2 |
| Dielectric Dissipation Factor $\times$ 10$^{-4}$<br>1MHz Room Temperature<br>40KHz 150°C<br>40KHz 250°C<br>40KHz 350°C | 12<br>20<br>46<br>203 | 24<br>61<br>182<br>688 | 17<br>57<br>161<br>564 | 20<br>42<br>137<br>515 | 9<br>13<br>45<br>213 |

[Table 10]

| | 14 | 15 | 16 | 17 |
|---|---|---|---|---|
| Coefficient of Thermal Expansion $\alpha$ [30-380°C] $\times$ 10$^{-7}$/°C | 96 | 53 | 84 | 98 |
| Liquidus Viscosity log $\eta$ dPa $\cdot$ s | 6.4 | 5.4 | 5.2 | 6.1 |
| Specific Volume Resistance log $\rho$ [250°C] $\Omega \cdot$ cm | 8.3 | 12.0 | 9.6 | 6.4 |
| Dielectric Constant $\varepsilon$<br>1MHz Room Temperature<br>40KHz 150°C<br>40KHz 250°C<br>40KHz 350°C | 6.7<br>6.9<br>7.6<br>10.2 | 5.3<br>5.4<br>5.6<br>6.3 | 7.6<br>8.5<br>9.4<br>11.2 | 7.0<br>8.4<br>13.1<br>21.1 |

(continued)

| Dielectric Dissipation Factor $\times$ 10$^{-4}$ | | | | |
|---|---|---|---|---|
| 1MHz RoomTemperature | 24 | 25 | 33 | 72 |
| 40KHz 150°C | 112 | 55 | 77 | 840 |
| 40KHz 250°C | 470 | 190 | 293 | 7500 |
| 40KHz 350°C | 3800 | 990 | 1429 | 100000 |

[Table 11]

| | 18 | 19 | 20 | 21 |
|---|---|---|---|---|
| Coefficient of Thermal Expansion $\alpha$ [30-380°C] $\times$ 10$^{-7}$/°C | 71 | 91 | 94 | 95 |
| Liquidus Viscosity log $\eta$ dPa $\cdot$ s | 5.1 | 4.2 | 4.9 | 1.6 |
| Specific Volume Resistance log $\rho$ [250°C] $\Omega \cdot$ cm | 9.7 | 9.4 | 10.9 | 9.0 |
| Dielectric Constant $\varepsilon$ 1MHz Room Temperature 40KHz 150°C 40KHz 250°C 40KHz 350°C | 7.7 | 7.6 | 8.0 | 7.2 7.8 8.0 8.6 |
| Dielectric Dissipation Factor $\times$ 10$^{-4}$ 1MHz Room Temperature 40KHz 150°C 40KHz 250°C 40KHz 350°C | 18 | 18 | 15 | 32 108 420 2359 |

[Table 12]

| | 22 | 23 | 24 |
|---|---|---|---|
| Coefficient of Thermal Expansion $\alpha$ [30-380°C] $\times$ 10$^{-7}$/°C | 81 | 71 | 84 |
| Liquidus Viscosity log $\eta$ dPa $\cdot$ s | 5.6 | 5.2 | 4.9 |
| Specific Volume Resistance log $\rho$ [250°C] $\Omega \cdot$ cm | | 11.2 | 10.0 |
| Dielectric Constant $\varepsilon$ 1MHz Room Temperature 40KHz 150°C 40KHz 250°C 40KHz 350°C | 6.4 6.1 6.4 6.9 | 6.9 6.6 6.7 6.9 | 7.2 8.3 8.5 9.2 |
| Dielectric Dissipation Factor $\times$ 10$^{-4}$ 1MHz Room Temperature 40KHz 150°C 40KHz 250°C 40KHz 350°C | 37 125 264 1579 | 8 11 41 189 | 43 136 294 1743 |

The plate-shaped samples having dimensions of 50x50x3t mm from the individual glass samples were prepared, electrodes of 30 mm$\phi$ were adhered thereon, and the dielectric constant $\varepsilon$ and the dielectric dissipation factor tan $\delta$ at 1 MHz and the room temperature and the specific volume resistance log $\rho$ at 250°C were measured using LCR meter. The conditions of measurement of the dielectric constant $\varepsilon$ and the dielectric dissipation factor tan $\delta$ were 1 MHz and 25°C.

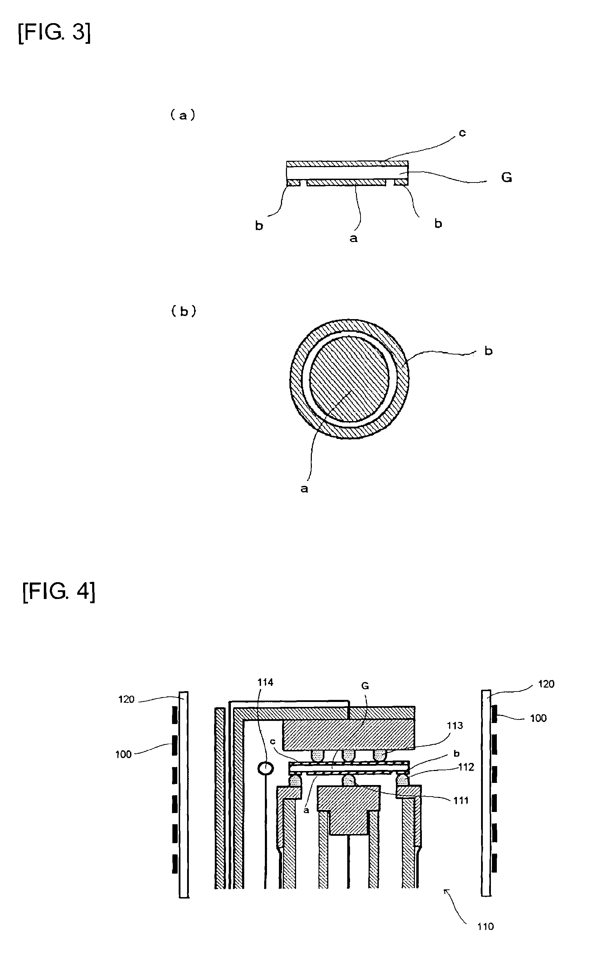

Evaluation of the dielectric constant $\varepsilon$ and the dielectric dissipation factor tan $\delta$ at 40 KHz were carried out in the following manner. Firstly, as shown in Fig. 3, a disk-shaped sample G of #1000 finish having a diameter of 20 mm and a thickness of 1 mm were prepared, and a main electrode a having an outer diameter of 14.5 mm and a guide electrode b having an outer diameter of 20 mm and an inner diameter of 16 mm provided concentrically on the outside of the main electrode a were manufactured by gold deposition respectively on one surface thereof. A counter electrode c was formed entirely over the other surface of the sample by gold deposition.

A measuring device has a structure having a heater 100, a sample measurement room 110 and an LCR meter (not shown) as shown in Fig. 4. The heater used here was a tape heater which was wound in non-dielectric manner. The sample measurement room 110 was installed in a shield (metallic cylinder) 120 in order to avoid electromagnetic induction caused by the influence of the heater 100. A main electrode terminal 111 which comes into contact with the main electrode a of the sample G and a guard electrode terminal 112 which comes into contact with the guard electrode b were integrally provided in the sample measurement room 110 so as to be capable of moving upward and downward. The main electrode terminal 111 was connected to a terminal of the LCR meter and the guard electrode terminal 112 was connected to a guard terminal of the LCR meter via conductors, respectively. A counter electrode terminal 113 which comes into contact with the counter electrode c of the sample G was provided on the upper portion in the sample measurement room 110. The counter electrode terminal 113 was connected to the terminal of the LCR meter via the conductor. A shield (aluminum foil, not shown) was provided between the conductor of the counter electrode terminal 113 and the conductor of the main electrode terminal 111 so as to avoid the mutual influence. A thermoelectric couple 114 connected to a thermometer was installed in the vicinity of the sample G held in the sample measurement room 110, so that the temperature of the sample was measured.

In order to measure the dielectric characteristics of the sample G using the measuring device described above, first of all, the sample G was placed on the main electrode terminal 111 and the guard electrode terminal 112. Then, the both terminals were moved upward to hold the sample G in a state of being pressed against the counter electrode terminal 113 installed on the upper portion therein. Then, the sample G was heated by the heater 100, and the dielectric characteristics at a predetermined temperature was measured by the LCR meter. In this manner, the dielectric dissipation factors were measured under the conditions of room temperature-1MHz, 40 KHz-150°C, 40KHz-250°C and 40KHz-350°C.

The coefficient of thermal expansion $\alpha$ was measured by the heat expansion measuring instrument.

The liquidus viscosity was obtained in the following manner. First of all, glass smashed into particles having a diameter on the order of 0.1 mm was put in a boat-shaped platinum container, and then was stored in a temperature gradient furnace for twenty-four hours, and was taken out therefrom. The sample was observed by a microscope and the temperature at which the primary phase of crystal was appeared (liquidus line temperature) was measured. Then, the viscosity corresponding to the temperature of the primary phase (liquidus line viscosity log p) was obtained from the relation between the temperature and the viscosity of the glass, which were measured in advance.

The temperature with respect to the viscosity was obtained by the ASTM C 336, ASTRM C 338 and Czochralski process.

EXAMPLE 2

A method of manufacturing a tube-type envelope for external electrode fluorescent lamp using glass having the same composition as the glass sample used in Example 1 will be described.

First of all, raw materials blended to obtain the same glasses as the samples are melted in a refractory product furnace at 1500°C for twenty-four hours. Then, the molten glass is supplied to a Danner forming device to draw a tube and is cut into tubular glasses having an outer diameter of 3.0 mm, a thickness of 0.3 mm and a length of 800 mm, so that the envelopes are obtained.

The envelopes obtained in such a manner are used for manufacturing the tube-type external electrode fluorescent lamps.

EXAMPLE 3

A method of manufacturing a flat-type envelope for external electrode fluorescent lamp using glass having the same composition as the glass sample used in Example 1 will be described.

First of all, raw materials blended to obtain the same glass as the respective samples are melted in the refractory product furnace at 1500°C. Then, the molten glass is supplied to a float forming apparatus to form a plate and cut into plate glasses of 300 × 200 mm having a thickness of 0.9 mm manufactured in the same manner, so that the backboards for the envelope are obtained. The plate glasses of 300 × 200 mm having a thickness of 0.9 mm are pressed by a metal die to form depressions for defining the discharge spaces, so that the front boards for the envelope are obtained.

The backboard and the front board obtained in this manner are joined in advance and formed into a box shape (envelope), and then are provided for the manufacture of the flat-type external electrode fluorescent lamp. Alternately, they are joined during the process of manufacturing the lamp, or in a final process to constitute the envelope for the flat-type external electrode fluorescent lamp.

**Claims**

1. An envelope for external electrode fluorescent lamp used for manufacturing an external electrode fluorescent lamp having a structure having electrodes provided on the outer surface thereof, **characterized by** being formed of glass containing 45 to 60% $SiO_2$, 0 to 10% $B_2O_3$, 0 to 10% $Al_2O_3$, 0 to 10% MgO, 0 to 10% CaO, 0 to 9% SrO, 5 to 25% BaO, 0 to 13% ZnO, 0 to 5% $TiO_2$, 0 to 3% $CeO_2$, 20 to 40% $\Sigma RO$ (=MgO+CaO+SrO+BaO+ZnO), and 5 to 9.8% $\Sigma R_2O$(=$Li_2O$+$Na_2O$+$K_2O$) by mass.

2. The envelope for external electrode lamp according to Claim 1, wherein $Li_2O/\Sigma R_2O$ is 0.4 or less by mass ratio.

3. The envelope for external electrode lamp according to Claim 1 or 2, wherein $Na_2O/\Sigma R_2O$ is 0.6 or less by mass ratio.

4. The envelope for external electrode lamp according to any one of Claims 1 to 3, wherein the $(\Sigma RO+\Sigma R_2O)/(SiO_2+B_2O_3+Al_2O_3)$ is 0.55 to 0.85 by mass ratio.

5. The envelope for external electrode lamp according to any one of Claims 1 to 4, **characterized by** being formed of glass having a coefficient of thermal expansion $\alpha$ of 70 to 90 $\times$ $10^{-7}$/°C at 30 to 380°C.

6. The envelope for external electrode lamp according to any one of Claims 1 to 5, **characterized by** being formed of glass having a dielectric constant $\varepsilon$ of 6.5 or more, and a dielectric dissipation factor tan $\delta$ of 0.003 or less at 1 MHz and the room temperature.

7. The envelope for external electrode lamp according to any one of Claims 1 to 6, **characterized by** being formed of glass having a specific volume resistance log $\rho$ of 9.5 or more at 250°C.

8. The envelope for external electrode lamp according to any one of Claims 1 to 7, **characterized by** being formed of glass having a dielectric constant $\varepsilon$ of 7 or more and a dielectric dissipation factor tan $\delta$ of 0.01 or less at 40 KHz and 150°C.

9. The envelope for external electrode lamp according to any one of Claims 1 to 8, **characterized by** being formed of glass having a dielectric constant $\varepsilon$ of 7 or more and a dielectric dissipation factor tan $\delta$ of 0.02 or less at 40 KHz and 250°C.

10. The envelope for external electrode lamp according to any one of Claims 1 to 9, **characterized by** being formed of glass having a dielectric constant $\varepsilon$ of 7 or more and a dielectric dissipation factor tan $\delta$ of 0.1 or less at 40KHz and 350°C.

11. The envelope for external electrode lamp according to any one of Claims 1 to 10, **characterized by** being formed of glass having a liquidus viscosity log $\eta$ of 5.2 or more.

[FIG. 1]

[FIG. 2]

[FIG. 3]

( a )

( b )

[FIG. 4]

## INTERNATIONAL SEARCH REPORT

| | International application No. |
|---|---|
| | PCT/JP2006/324149 |

A. CLASSIFICATION OF SUBJECT MATTER
*C03C3/078*(2006.01)i, *C03C3/085*(2006.01)i, *C03C3/087*(2006.01)i, *C03C3/089* (2006.01)i, *C03C3/091*(2006.01)i, *C03C3/093*(2006.01)i, *C03C3/095*(2006.01)i, *H01J61/30*(2006.01)i, *H01J65/00*(2006.01)i
According to International Patent Classification (IPC) or to both national classification and IPC

B. FIELDS SEARCHED

Minimum documentation searched (classification system followed by classification symbols)
C03C3/078, C03C3/085, C03C3/087, C03C3/089, C03C3/091, C03C3/093, C03C3/095, H01J61/30, H01J65/00

Documentation searched other than minimum documentation to the extent that such documents are included in the fields searched
Jitsuyo Shinan Koho          1922-1996     Jitsuyo Shinan Toroku Koho   1996-2007
Kokai Jitsuyo Shinan Koho    1971-2007     Toroku Jitsuyo Shinan Koho   1994-2007

Electronic data base consulted during the international search (name of data base and, where practicable, search terms used)
INTERGLAD Ver.6

C. DOCUMENTS CONSIDERED TO BE RELEVANT

| Category* | Citation of document, with indication, where appropriate, of the relevant passages | Relevant to claim No. |
|---|---|---|
| X<br>Y | JP 2002-338296 A (Nippon Electric Glass Co., Ltd.),<br>27 November, 2002 (27.11.02),<br>Claims 1, 6, 8, 9, 11; Par. No. [0040]<br>& WO 02/072492 A1 | 1-11<br>1-11 |
| X | JP 2005-93422 A (Nippon Electric Glass Co., Ltd.),<br>07 April, 2005 (07.04.05),<br>Claims 1, 3 to 8, 10<br>& WO 2005/015606 A1     & EP 1653499 A1 | 1-11 |
| Y | JP 60-264343 A (Hoya Corp.),<br>27 December, 1985 (27.12.85),<br>Claims 1 to 3; page 4, lower left column, tables<br>(Family: none) | 1-11 |

☒ Further documents are listed in the continuation of Box C.     ☐ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search<br>11 January, 2007 (11.01.07) | Date of mailing of the international search report<br>23 January, 2007 (23.01.07) |
|---|---|
| Name and mailing address of the ISA/<br>Japanese Patent Office | Authorized officer |
| Facsimile No. | Telephone No. |

Form PCT/ISA/210 (second sheet) (April 2005)

**INTERNATIONAL SEARCH REPORT**

| International application No. |
|---|
| PCT/JP2006/324149 |

C (Continuation).    DOCUMENTS CONSIDERED TO BE RELEVANT

| Category* | Citation of document, with indication, where appropriate, of the relevant passages | Relevant to claim No. |
|---|---|---|
| Y | JP 3-40933 A  (Asahi Glass Co., Ltd.), 21 February, 1991 (21.02.91), Claim 1; page 3, upper right column, tables (Family: none) | 1-11 |
| Y | JP 8-165138 A  (Asahi Glass Co., Ltd.), 25 June, 1996 (25.06.96), Claims 1 to 8; tables 1, 2 & US 5599754 A           & EP 0769481 A1 | 1-11 |

Form PCT/ISA/210 (continuation of second sheet) (April 2005)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2002008408 A
- JP 2002508574 A

- JP 2000156199 A

**Non-patent literature cited in the description**

- *Journal of the Illuminating Engineering Institute of Japan,* 2003, vol. 87 (1), 18